(19) Europäisches Patentamt
European Patent Office
Office européen des brevets

(11) Veröffentlichungsnummer : **0 037 952**
**B1**

(12) **EUROPÄISCHE PATENTSCHRIFT**

(45) Veröffentlichungstag der Patentschrift : **24.08.83**

(51) Int. Cl.$^3$ : **C 08 C 19/28**

(21) Anmeldenummer : **81102387.8**

(22) Anmeldetag : **30.03.81**

# (54) Verfahren zur Herstellung von Maleinatölen.

(30) Priorität : **12.04.80 DE 3014106**

(43) Veröffentlichungstag der Anmeldung : **21.10.81 Patentblatt 81/42**

(45) Bekanntmachung des Hinweises auf die Patenterteilung : **24.08.83 Patentblatt 83/34**

(84) Benannte Vertragsstaaten : **DE FR GB IT NL**

(56) Entgegenhaltungen :
**DE A 2 147 639**
**FR A 2 328 724**

(73) Patentinhaber : **BAYER AG**
**Zentralbereich Patente, Marken und Lizenzen**
**D-5090 Leverkusen 1, Bayerwerk (DE)**

(72) Erfinder : **Rössert, Michael, Dr.**
**Fastlinger Ring 187**
**D-8044 Unterschleissheim (DE)**
Erfinder : **Dhein, Rolf, Dr.**
**Deswatinesstrasse 30**
**D-4150 Krefeld (DE)**

**EP 0 037 952 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Maleinatölen

Die vorliegende Erfindung betrifft ein Verfahren zur Herstellung von Maleinatölen mit geringem Gelgehalt unter Verwendung N-substituierter Maleinsäureimide.

Dienpolymerisate zählen seit vielen Jahren zu den wichtigen Rohstoffen für Lackbindemittel. So hat man synthetische Polybutadien-, Polyisopren- und Polycyclopentadienharze sowie deren Kombinationen mit natürlichen ungesättigten Ölen, Fettsäuren, Phenolharzen oder Vinylverbindungen mit Maleinsäureanhydrid umgesetzt (JP-AS 46-954).

Auf diese Weise lassen sich Zwischenprodukte für die Herstellung von Alkydharzen (JP-AS 46-21 193) und von wasserlöslichen Bindemitteln (JP-AS 46-7269) gewinnen. Die DE-OS 20 16 223 und 20 38 768 betreffen Polybutadienöl/Maleinsäureanhydrid-Addukte für die anodische Elektrotauchlackierung. Zur Gewinnung von kathodischen Elektrotauchlacken werden maleinisierte Olefinpolymere nachträglich mit Diaminen, welche eine primäre und eine tertiäre Aminogruppe tragen, umgesetzt (DE-OS 27 28 470).

Die Anlagerung von Maleinsäureanhydrid an Olefinpolymerisate wird üblicherweise in der Hitze durchgeführt. Als Nebenreaktion erfolgt dabei mehr oder weniger eine radikalisch ablaufende Vernetzung, was zu einer Viskositätserhöhung und zur Gefahr vorzeitiger Gelierung führt. Die Schwierigkeit der Viskositätssteuerung und der Wunsch nach Vermeidung qualitätsmindernder Gelpartikel haben bereits in der Vergangenheit zur Verwendung von Gelinhibitoren geführt. Beispielsweise werden zu diesem Zweck cyclische Ether, Aldehyde oder Ketone (JP-AS 48-3547), Amide (JP-AS 48-3544), Brenzkatechine (JP-OS 50-7895), Naphthole (JP-OS 50-87 491) und Phenothiazine (JP-OS 49-132 013) empfohlen. Die JP-AS 43-26 870 beschreibt die Anlagerung von Maleinsäureanhydrid an Polybutadien bei 50 °C in Gegenwart von Kupferverbindungen, die JP-AS 47-44 557 die Verwendung eines Komplexbildners, wie z. B. Acetylaceton, und in der DE-OS 26 47 854 schließlich wird der Zusatz von Imidazolen, Thiazolen, Metallsalzen von Mercaptothiazolen, Harnstoffderivaten, Naphthylaminen, Nitrosaminen, Eisen und seinen Verbindungen, Chloriden, Bromiden, Jodiden, Chlorwasserstoff, Bromwasserstoff, Jodwasserstoff, Alkylmetallhalogeniden, halogenierten Kohlenwasserstoffen, Alkinylhalogeniden, chlorierten bzw. bromierten Ketonen, halogenierten Allylverbindungen empfohlen.

Es wurde nun überraschenderweise gefunden, daß selbst geringe Mengen basischer Maleinsäureimide bzw. deren Salze bei der Umsetzung von Maleinsäureanhydrid und Dienpolymerisaten als Gelierungsinhibitoren wirken und allen zu diesem Zweck bereits empfohlenen Verbindungen überlegen sind.

Gegenstand der Erfindung ist ein Verfahren zur Addition von Maleinsäureanhydrid an Dienpolymerisate mit einer Viskosität von 400 bis 50 000 mPa.s (gemessen bei 30 °C) in Gegenwart mindestens eines Gelierungsinhibitors, dadurch gekennzeichnet, daß als Gelierungsinhibitors, eine Verbindung der Formel

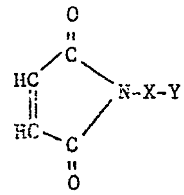

verwendet wird, worin

X einen zweiwertigen aliphatischen, cycloaliphatischen, aliphatisch-cycloaliphatischen, aromatischen oder aliphatisch-aromatischen Rest mit 1 bis 12, vorzugsweise 2 bis 10, C-Atomen,

Y eine Aminogruppe der Formel $NR^1R^2$ oder eine Ammoniumgruppe der Formel

$$\overset{\oplus}{N}R^1R^2R^3 \quad Z^{\ominus},$$

$R^1$, $R^2$ einen Alkylrest mit 1 bis 6 vorzugsweise 1 bis 4, C-Atomen oder

$R^1$ und $R^2$ zusammen einen Alkylenrest mit 2 bis 6, vorzugsweise 3 bis 5, C-Atomen, der zusätzlich auch ein Heteroatom aus der Reihe N, S, O enthalten kann,

$R^3$ ein Wasserstoffatom, einen Alkylrest oder Aralkylrest mit 1 bis 18 C-Atomen oder die Gruppe $CH_2—CO—NH_2$,

$Z^{\ominus}$ ein einwertiges Anion, vorzugsweise ein Hydrogencarbonat, Tetrafluorborat, Formiat, Acetat, Propionat, Butyrat, Lactat, Halogenid, insbesondere Chlorid, Bromid, Jodid, ein Methylsulfat-anion oder

$R^3$ und $Z^{\ominus}$ zusammen eine Gruppe der Formeln

$$(CH_2)_n—SO_3^{\ominus} \text{ bzw. } (CH_2)_m—CO_2^{\ominus} \text{ und}$$

n, m eine ganze Zahl von 2 bis 6, vorzugsweise 3 oder 4, bedeuten.

Bevorzugte Gelierungsinhibitoren sind Verbindungen der obigen Formel, worin

X $(X^1)_p—(X^2)_q—(X^3)_r$,

$X^1$, $X^2$, $X^3$ eine Alkylengruppe oder einen carbocyclischen Rest, vorzugsweise

$X^1$, $X^3$ eine Alkylengruppe und
$X^2$ einen carbocyclischen Rest, und
p, q, r jeweils 0 oder 1 bedeuten.

Besonders bevorzugte Gelierungsinhibitoren sind Verbindungen der obigen Formel, worin der Rest —X—Y folgende Bedeutung hat:

$-(CH_2)_{2-10}-N(CH_3)_2$, insbesondere $-(CH_2)_2-N(CH_3)_2$, $-(CH_2)_3-N(CH_3)_2$; $-(CH_2)_{2-10}-N(C_2H_5)_2$, $-(CH_2)_2-N(C_4H_9)_2$,

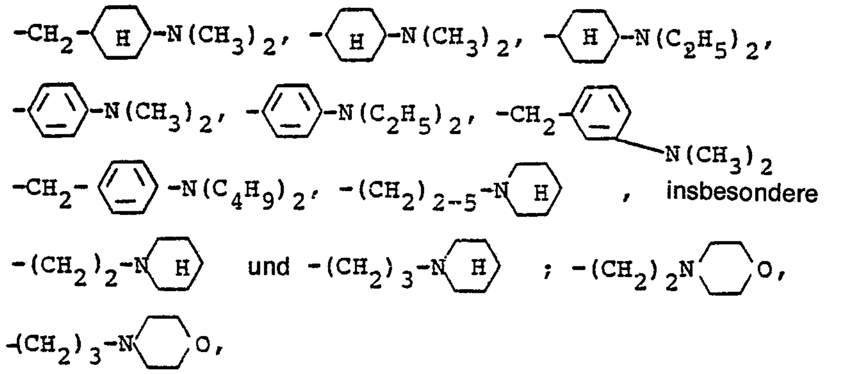

, insbesondere

und

;

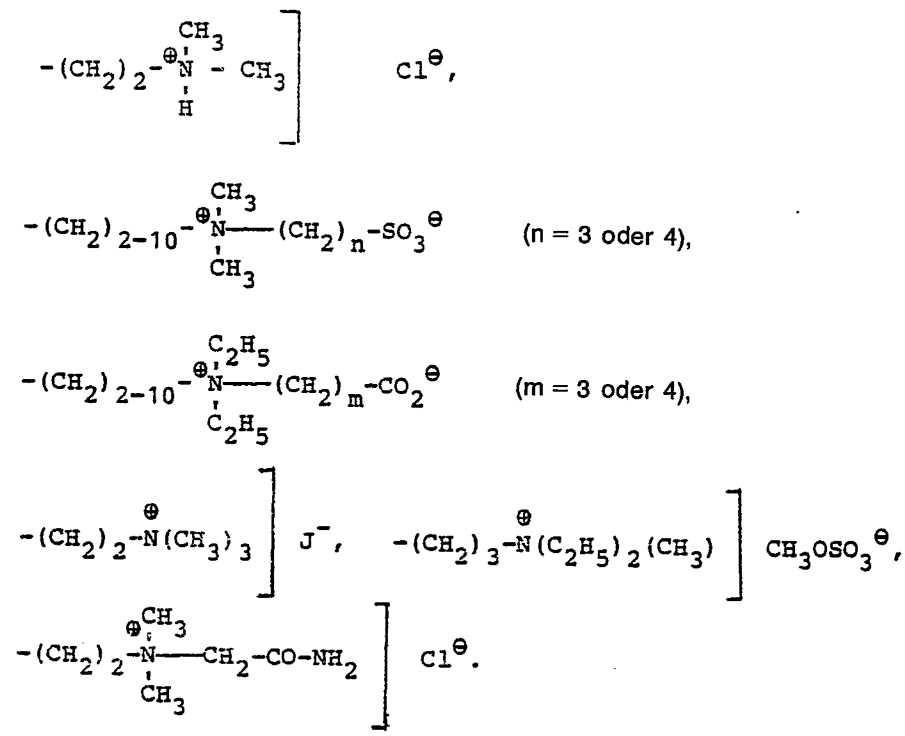

(n = 3 oder 4),

(m = 3 oder 4),

Bevorzugte Dienpolymerisate im Sinne der Erfindung sind Homo- und Copolymerisate von Dienen, wie Butadien-1,3, Isopren, Cyclopentadien, Methylcyclopentadien, Chloropren, 2,3-Dimethylbutadien-1,3 sowie Copolymerisate dieser Diene mit anderen mischpolymerisierbaren Verbindungen, wobei die Copolymerisate jeweils mindestens 20, vorzugsweise mindestens 50, Gew.-% einkondensierter Reste von Dienen enthalten sollten. « Andere mischpolymerisierbare Verbindungen » sind vorzugsweise Styrol, α-, Methylstyrol (Meth-)Acrylsäureester, Vinylester, wie z. B. Vinylacetat, aber auch ungesättigte Fettsäuren und ungesättigte Öle, z. B. Leinöl, Sojaöl, Holzöl, Safflloröl, Ricinusöl, Ricinenöl, Baumwollsaatöl, Tallöl, die Fettsäuren dieser Öle und durch Konjugierung oder Isomerisierung dieser Fettsäuren und Öle gewonnene Produkte.

Die Dienpolymerisate können beliebige Anteile an cis-, trans-, Vinyl- bzw. 3,4-Struktur besitzen. Bei Verwendung niedermolekularer Butadien/Styrol- oder Isopren/Styrol-Copolymerisate ist es vorteilhaft, wenn diese Copolymerisate höchstens 40 Gew.-% Styrolreste einpolymerisiert enthalten. Die — vorzugsweise flüssigen — Dienpolymerisate können nach üblichen Methoden, z. B. gemäß US-PS 34 28 699, hergestellt werden.

Die zur Umsetzung mit Maleinsäureanhydrid eingesetzten Dienpolymerisate besitzen in der Regel mittlere Molekulargewichte von 500 bis 15 000.

Falls gewünscht, kann die Umsetzung der Dienpolymerisate mit den anderen copolymerisierbaren Verbindungen auch gleichzeitig mit der Maleinsäureanhydrid-Anlagerung als Eintopfreaktion erfolgen.

Zur Anlagerung von Maleinsäureanhydrid an die Dienpolymerisate in Gegenwart des Gelierungsinhibitors können die Reaktionspartner in beliebiger Reihenfolge — z. B. auch gleichzeitig — in ein Reaktionsgefäß eingespeist und dann bei 60 bis 230 °C, vorzugsweise 170 bis 210 °C, bis zur vollständigen Reaktion, vorzugsweise 1 bis 10 Stunden lang, miteinander zur Reaktion gebracht werden. In der Praxis hat es sich oft als vorteilhaft erwiesen, das Dienpolymerisat und den Gelierungsinhibitor vorzulegen und bis zu 20 Stunden bei 10 bis 270 °C stehenzulassen, erst dann das Maleinsäureanhydrid einzutragen und, vorzugsweise unter Inertgasatmosphäre, zu erhitzen. Da die Adduktbildung nahezu quantitativ verläuft, kann auf die Rückgewinnung nicht umgesetzter Ausgangskomponenten in der Regel verzichtet werden.

Der Gehalt an Maleinsäureanhydrid im Addukt beträgt vorzugsweise 2 bis 70, insbesondere 8 bis 25 Gew.-%, bezogen auf Addukt.

Der Gelierungsinhibitor kann in einer Menge von 0,001 bis 20 Gew.-%, vorzugsweise 0,005 bis 0,5 Gew.-%, bezogen auf das Dienpolymerisat, das mit Maleinsäureanhydrid umgesetzt wird, verwendet und als solcher oder in Form seiner Lösung in einem organischen Lösungsmittel eingesetzt werden.

Die Anlagerungsreaktion von Maleinsäureanhydrid an das flüssige Dienpolymerisat wird gewöhnlich in Abwesenheit, kann jedoch auch in Gegenwart organischer Lösungsmittel vorgenommen werden. Beispiele für verwendbare Lösungsmittel sind aliphatische Kohlenwasserstoffe, wie flüssiges Paraffin, n-Paraffine und Petrolether, alicyclische Kohlenwasserstoffe, wie Cyclohexan und Isopropylcyclohexan, aromatische Kohlenwasserstoffe, wie Benzol, Toluol und Xylol sowie Ester, wie Ethylacetat oder Butylacetat. Ferner können Ketone, wie Aceton oder Methylethylketon, und cyclische Ether, wie Dioxan, verwendet werden.

Die lufttrocknenden Eigenschaften der erfindungsgemäß hergestellten Maleinsäureanhydrid-Addukte können durch Zusatz üblicher Trockenstoffe, wie Kobaltnaphthenat, erheblich beschleunigt werden. Zur Aushärtung daraus hergestellter Überzüge können den Überzugsmitteln Polyole, Polymercaptane, Polyamine oder Polyphenole zugesetzt werden.

Verglichen mit den bekannten Gelierungsinhibitoren haben die erfindungsgemäß verwendeten Gelierungsinhibitoren verschiedene Vorzüge: Beispielsweise vermindern sie schon in geringen Mengen die Viskosität des Reaktionsgemisches in ausreichender und befriedigender Weise. Ferner ist ihr größter Vorteil, daß sie selbst mit den Polymerisaten reagieren, also nicht aus dem Film diffundieren können.

Des weiteren wirken die eingesetzten N-substituierten Maleinsäureimide nicht nur als Gelierungsinhibitoren, sondern überraschenderweise auch als Reaktionsbeschleuniger.

Die erfindungsgemäß hergestellten Maleinsäureanhydrid/Dienpolymerisat-Addukte eignen sich als Rohstoffe für wasserverdünnbare Bindemittel, z. B. anodisch bzw. kathodisch abscheidbare Elektrotauchlackbindemittel und Alkydharze.

Die in den nachfolgenden Beispielen vorkommenden Prozentangaben bezeichnen Gewichtsprozente.

## Beispiele

Ablauf der Maleinisierung von Polyol-Sojaöl-Umsetzungsprodukten

1. ohne Gelierungsinhibitor,
2. mit 0,38 %, bezogen auf das Umsetzungsprodukt von Sojaöl mit Polybutadienol, N-(N',N'-Diethylaminopropyl)-maleinsäureimid und
3. mit 0,143 %, bezogen auf das Umsetzungsprodukt von Sojaöl mit Polybutadienöl, einer 50 %igen Lösung von Kupfernaphthenat (Kupfergehalt 10 %) in Lackbenzin (Kp 140/190 °C).

(Siehe die Tabelle Seite 5)

| Reaktionszeit bei 180°C | Viskosität entspricht einer Auslaufzeit (gemessen als 50 %ige Lösung in Xylol nach DIN 53 211, DIN-Becher 4) von Ansatz | | |
|---|---|---|---|
| | 1 | 2 | 3 |
| 0 | 23 sec | 18 sec | 19 sec |
| 2 h 20 Min. | nach 1 h geliert | 23 sec x) | 29 sec x) |
| 4 h 20 Min. | - | 28 sec y) | 38 sec x) |
| 11 h 30 Min. | - | 75 sec y) | 60 sec y) |

x) Maleinsäureanhydrid läßt sich nachweisen ($^1$H-NMR)
y) Maleinsäureanhydrid läßt sich nicht mehr nachweisen

Säurezahlen (Endwerte) :

| Beispiel | 2 | 3 |
|---|---|---|
| Halbestersäurezahl : | 52 | 61 |
| Gesamtsäurezahl : | 78 | 111 |
| Anhydridsäurezahl : | 88 | 100 |

Durchführung :

Zu jeweils

467 g eines Umsetzungsproduktes aus

1 521 g Polybutadienöl (1,4-cis-Polybutadienöl mit einer Viskosität von 900 mPas (bei 20 °C), einer Jodzahl von 450 und einer Farbzahl von 10) und

503 g Sojaöl

mit einer Viskosität entsprechend einer Auslaufzeit von 48 sec. (gemessen als 70 %ige Lösung in Xylol, DIN 53 211, DIN-Becher 4) werden unter Rühren in Stickstoffatmosphäre und bei iner Temperatur von 130 °C

a) 70,8 g Maleinsäureanhydrid gegeben und der Ansatz anschließend 30 Min. bei 130 °C gehalten,

b) 70,8 g Maleinsäureanhydrid und danach 1,77 g N-(N',N'-Diethylaminopropyl)-maleinsäureimid gegeben

c) 0,67 g einer 50 %igen Lösung von Kupfernaphthenat (Kupfergehalt 10 %) in Lackbenzin (Kp 140/190 °C) und nach 30 Min. bei 130 °C 70,8 g Maleinsäureanhydrid gegeben.

Anschließend werden die Ansätze innerhalb von 2 h auf 180 °C erhitzt und bei dieser Temperatur 11 h 40 Min. gehalten.

**Ansprüche**

1. Verfahren zur Addition von Maleinsäureanhydrid an Dienpolymerisate mit einer Viskosität von 400 bis 50 000 mPas (gemessen bei 30 °C) in Gegenwart mindestens eines Gelierungsinhibitors, dadurch gekennzeichnet, daß als Gelierungsinhibitor eine Verbindung der Formel

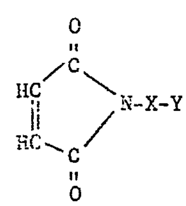

verwendet wird, worin

X einen zweiwertigen aliphatischen, cycloaliphatischen, aliphatisch-cycloaliphatischen, aromatischen oder aliphatisch-aromatischen Rest mit 1 bis 12 C-Atomen,

Y eine Aminogruppe der Formel $NR^1R^2$ oder eine Ammoniumgruppe der Formel

$$\overset{\oplus}{N}R^1R^2R^3 \qquad Z^{\ominus},$$

$R^1$, $R^2$ einen Alkylrest mit 1 bis 6 C-Atomen oder

$R^1$ und $R^2$ zusammen einen Alkylenrest mit 2 bis 6 C-Atomen, der zusätzlich auch ein Heteroatom aus der Reihe N, S, O enthalten kann,

$R^3$ ein Wasserstoffatom, einen Alkylrest oder Aralkylrest mit 1 bis 18 C-Atomen oder die Gruppe $CH_2—CO—NH_2$,

$Z^{\ominus}$ ein einwertiges Anion, oder

$R^3$ und $Z^{\ominus}$ zusammen eine Gruppe der Formeln

$$(CH_2)_n—SO_3^{\ominus} \quad \text{bzw.} \quad (CH_2)_m—CO_2^{\ominus} \quad \text{und}$$

n, m eine ganze Zahl von 2 bis 6 bedeuten.

2. Verfahren nach Anspruch 1, dadurch gekennzeichnet, daß das Verfahren bei Temperaturen von 60 bis 230 °C durchgeführt wird.

3. Verfahren nach Ansprüchen 1 und 2, dadurch gekennzeichnet, daß die Reaktionsdauer 1 bis 10 Stunden beträgt.

4. Verfahren nach Ansprüchen 1-3, dadurch gekennzeichnet, daß das Verfahren in Gegenwart von

0,001 bis 20 Gew.-%, bezogen auf Dienpolymerisat, Gelierungsinhibitor durchgeführt wird.

5. Verfahren nach Ansprüchen 1-4, dadurch gekennzeichnet, daß der Rest X 2 bis 10 C-Atome enthält.

6. Verfahren nach Ansprüchen 1-5, dadurch gekennzeichnet, daß die Reste $R^1$, $R^2$ jeweils 1 bis 4 C-Atome enthalten.

7. Verfahren nach Ansprüchen 1-6, dadurch gekennzeichnet, daß $R^1$ und $R^2$ zusammen einen Alkylenrest mit 3 bis 5 C-Atomen bedeuten.

8. Verfahren nach Ansprüchen 1-7, dadurch gekennzeichnet, daß $Z^\ominus$ Chlorid, Bromid oder Jodid bedeutet.

9. Verfahren nach Ansprüchen 1-8, dadurch gekennzeichnet, daß n, m jeweils 3 oder 4 bedeuten.

**Claims**

1. A process for the addition of maleic acid anhydride to diene polymers with a viscosity of from 400 to 50,000 mPas (measured at 30 °C) in the presence of at least one gel-inhibitor, characterised in that as gel inhibitor there is used a compound corresponding to the formula

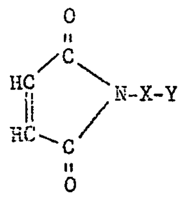

wherein

X represents a divalent aliphatic, cycloaliphatic, aliphatic-cycloaliphatic, aromatic or aliphatic-aromatic radical with from 1 to 12 carbon atoms,

Y represents an amino group corresponding to the formula $NR^1R^2$ or an ammonium group corresponding to the formula

$$\overset{\oplus}{N}R^1R^2R^3 \quad Z^\ominus$$

$R^1$, $R^2$ represent an alkyl radical with from 1 to 6 carbon atoms or

$R^1$ and $R^2$ together represent an alkylene radical with from 2 to 6 carbon atoms which can additionally also contain a hetero-atom from the series N, S, O,

$R^3$ represents a hydrogen atom, an alkyl radical or aralkyl radical with from 1 to 18 carbon atoms or the group $CH_2—CO—NH_2$,

$Z^\ominus$ represents a monovalent anion, or

$R^3$ and $Z^\ominus$ together represent a group corresponding to the formulae

$$(CH_2)_n—SO_3^\ominus \text{ and } (CH_2)_m—CO_2^\ominus \text{ and}$$

n, m represent an integer from 2 to 6.

2. A process according to Claim 1, characterised in that the process is carried out at a temperature of from 60 °C to 230 °C.

3. A process according to Claim 1 and 2, characterised in that the reaction lasts for from 1 to 10 hours.

4. A process according to Claims 1 to 3, characterised in that the process is carried out in the presence of from 0.001 to 20 % by weight, based on diene polymer, of gel-inhibitor.

5. A process according to Claims 1 to 4, characterised in that the radical X contains from 2 to 10 carbon atoms.

6. A process according to Claims 1 to 5, characterised in that the radicals $R^1$, $R^2$ contain from 1 to 4 carbon atoms respectively.

7. A process according to Claims 1 to 6, characterised in that $R^1$ and $R^2$ together represent an alkylene radical with from 3 to 5 carbon atoms.

8. A process according to Claims 1 to 7, characterised in that $Z^\ominus$ represents a chloride, bromide or iodide radical.

9. A process according to Claims 1 to 8, characterised in that n, m represents 3 or 4 respectively.

**Revendications**

1. Procédé pour fixer l'anhydride maléique par addition sur des polymères diéniques présentant une viscosité de 400 à 50 000 mPas (mesure à 30 °C) en présence d'au moins un inhibiteur de gélification, caractérisé en ce que l'on utilise en tant qu'inhibiteur de gélification un composé de formule

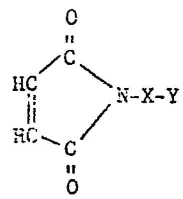

dans laquelle

X représente un reste aliphatique, cycloaliphatique, aliphatique-cycloaliphatique, aromatique ou aliphatique-aromatique contenant de 1 à 12 atomes de carbone,

Y représente un groupe amino de formule $NR^1R^2$ ou un groupe ammonium de formule

$$\overset{\oplus}{N}R^1R^2R^3 \quad Z^{\ominus},$$

$R^1$, $R^2$ représentent un reste alkyle contenant de 1 à 6 atomes de carbone ou bien

$R^1$ et $R^2$ représentent ensemble un reste alkylène contenant de 2 à 6 atomes de carbone et qui peut contenir en outre encore un hétéroatome de la classe N, S, O,

$R^3$ représente un atome d'hydrogène, un reste alkyle ou aralkyle contenant de 1 à 18 atomes de carbone ou le groupe $CH_2—CO—NH_2$,

$Z^{\ominus}$ représente un anion monovalent, ou bien

$R^3$ et $Z^{\ominus}$ forment ensemble un groupe de formule

$$(CH_2)_n—SO_3^{\ominus} \quad \text{ou} \quad (CH_2)_m—CO_2^{\ominus} \quad \text{et}$$

n, m représentent un nombre entier de 2 à 6.

2. Procédé selon la revendication 1, caractérisé en ce que le procédé est mis en œuvre à des températures de 60 à 230 °C.

3. Procédé selon les revendications 1 et 2, caractérisé en ce que la durée de réaction est de 1 à 10 h.

4. Procédé selon les revendications 1 à 3, caractérisé en ce que le procédé est mis en œuvre en présence de 0,001 à 20 % en poids, par rapport au polymère diénique, d'inhibiteur de gélification.

5. Procédé selon les revendications 1 à 4, caractérisé en ce que le reste X contient de 2 à 10 atomes de carbone.

6. Procédé selon les revendications 1 à 5, caractérisé en ce que les restes $R^1$, $R^2$ contiennent chacun de 1 à 4 atomes de carbone.

7. Procédé selon les revendications 1 à 6, caractérisé en ce que $R^1$ et $R^2$ forment ensemble un reste alkylène contenant de 3 à 5 atomes de carbone.

8. Procédé selon les revendications 1 à 7, caractérisé en ce que $Z^{\ominus}$ représente un chlorure, bromure ou iodure.

9. Procédé selon les revendications 1 à 8, caractérisé en ce que n, m sont égaux chacun à 3 ou 4.